Europäisches Patentamt

**European Patent Office**

Office européen des brevets

(11) Publication number: **0 055 302**
**A1**

(12) **EUROPEAN PATENT APPLICATION**

(21) Application number: **80104618.6**

(22) Date of filing: **06.08.80**

(51) Int. Cl.³: **G 11 B 25/06**
**G 11 B 15/66, G 11 B 5/46**

(30) Priority: **27.12.79 JP 184823/79 U**

(43) date of publication of application:
**07.07.82 Bulletin 82/27**

(84) Designated Contracting States:
**AT BE CH FR IT LI LU NL SE**

(71) Applicant: **Efuti Giken Co.,LTD.**
**6-1-12, Rokkakubashi**
**Kanagawa-ku Yokohama-shi Kanagawa-ken(JP)**

(71) Applicant: **Funai Electric Trading Co., Ltd.**
**1-7, 3-chome, Nakagawa Ikuno-ku**
**Osaka(JP)**

(72) Inventor: **Kawai, Tsutomu Yokosuka Heim Room 711**
**28, Ogawa-cho**
**Yokosuka-shi Kanagawa-ken(JP)**

(74) Representative: **Lehn, Werner, Dipl.-Ing. et al,**
**Hoffmann, Eitle & Partner Patentanwälte**
**Arabellastrasse 4 (Sternhaus)**
**D-8000 München 81(DE)**

(54) A video tape recorder and a method of assembling a video tape recorder.

(57) An assembly of components of a video tape recorder includes for simple assembling, setting and design a sub-mounting (18) having mounted thereon a rotary head (1) located in a cylindrical part (19, 19a) of the sub-mounting (18). Electrical control elements such as a full width erase head (4), audio erase head (9), audio control head (10) together with tape drive and guide elements such as pinch roller (3) and guide pins (5 to 8) are also mounted on the sub-mounting (18). The whole forms an assembly which is adapted to be mounted on a chassis (21) of the video tape recorder.

Fig.1.

Fig. 2.

EP 0 055 302 A1

0055302

- 1 -

A video tape recorder and a method of assembling a video tape recorder

The invention relates to a video tape recorder and a method for assembling electric control elements such as a rotary head and an audio control head of a video tape recorder onto a chassis by assembling the rotary head and electric elements onto a sub-mounting to form a sub-assembly which is then secured to the chassis.

According to the present invention there is provided a video tape recorder including a chassis and a sub-assembly mounted on the chassis, the sub-assembly having a sub-mounting secured to the chassis, the sub-mounting carrying a rotary head and having a cylindrical portion adapted to receive and locate the rotary head, the sub-mounting further carrying electrical control elements comprising at least some of a pinch roller, a full width tape erase head, an audio erase head, an audio control head and guide means for guiding a tape relative to the electrical control elements.

The invention also provides a method of assembling a video tape recorder including the steps of, securing a rotary head, a pinch roller, a full width tape erase head, an audio erase head, an audio control head and a plurality of tape guide pins on a sub-mounting to form a sub-assembly, adjusting the position of the audio control head and the audio erase head relative to the sub-mounting, adjusting the position of at least some of the guide pins relative to the sub-mounting, and then securing the sub-assembly to a chassis of the recorder.

- 2 -

The detailed construction of a video tape recorder incorporating the embodiment to be described is disclosed in six co-pending Patent Applications of even date to which attention is directed.

A preferred embodiment of the invention will now be described by way of example with reference to the accompanying drawings, wherein:

Figure 1 is a plan view of the device in the assembled state;

Figure 2 is a sectional view taken along line A-A of Figure 1;

Figure 3 is a plan view of the sub-mounting;

Figure 4 is an enlarged view as viewed along line B-B of Figure 1;

Figure 5 is an enlarged view as viewed along line C-C of Figure 1;

Figure 6 is a reference view of the left loading device; and

Figure 7 is an enlarged view as viewed along line D-D of Figure 6.

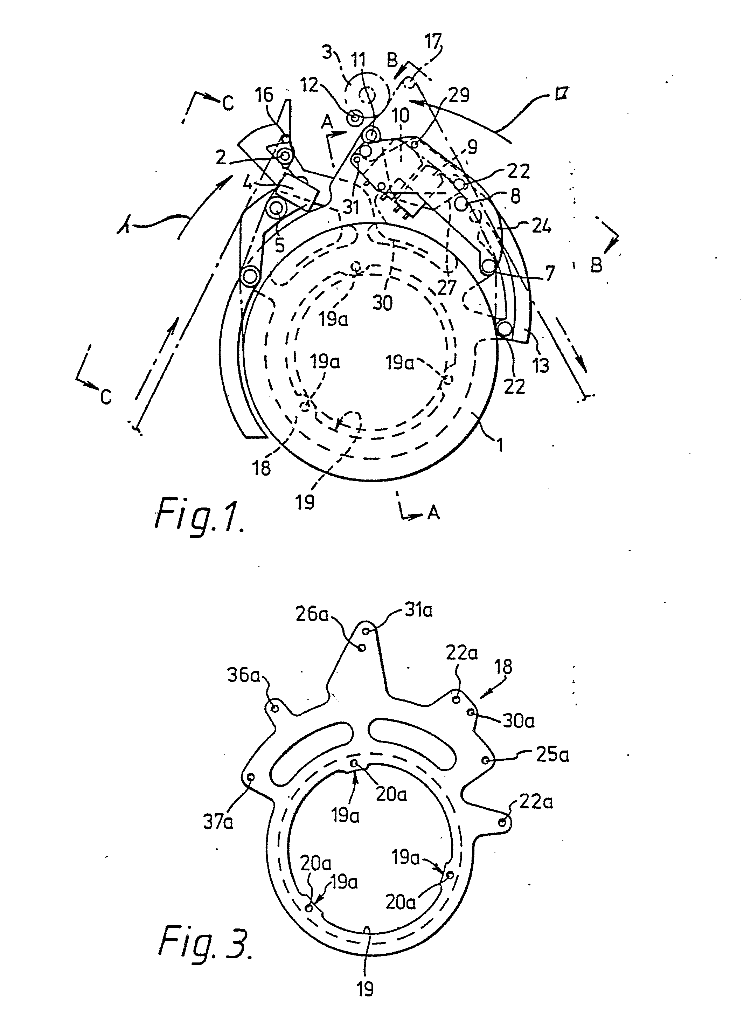

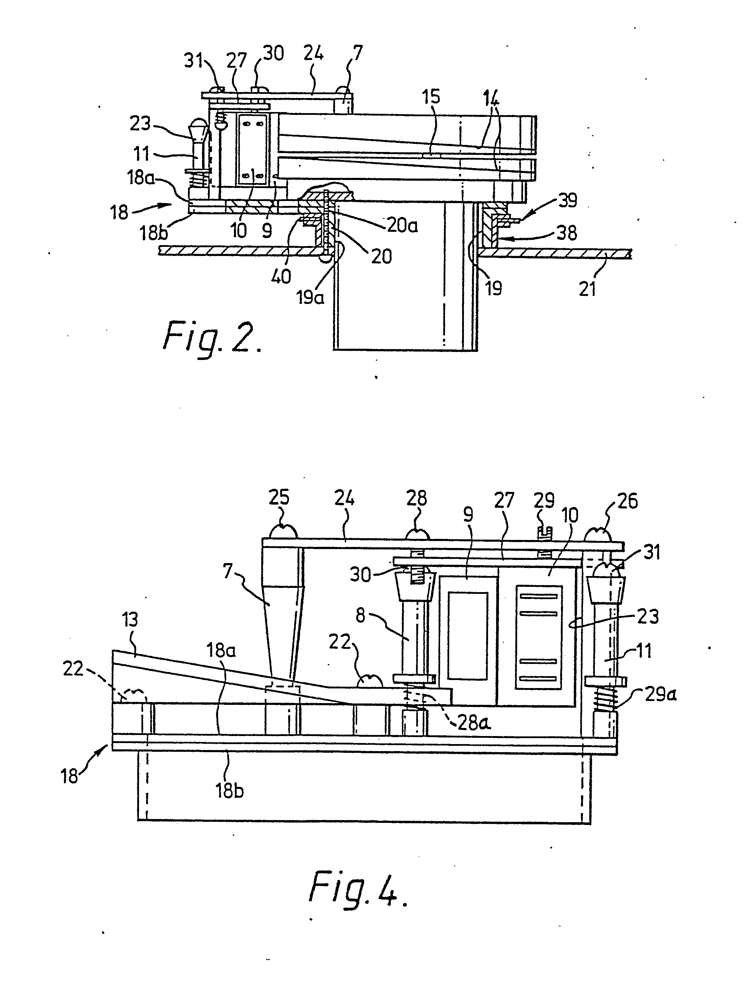

The loading system of a video cassette recorder by which a cassette tape is placed in a condition for playback or recording will be explained first by referring to Figure 1. From the front of a cassette (not shown) placed below the rotary head 1, shown in Figure 1, so that the head 1 is located above the mid-point between a pair of reels, a tape T is pulled out by a left loading pull-out pin 2 which pivots clockwise so that the tape contacts a full width erase head 4, guide pins 5 and 6, the rotary head 1, guide pins 7 and 8, an audio erase head 9, an audio control head 10, a guide pin 11, a capstan 12 and the pinch roller 3 in order named from the playback travelling direction of the tape (in the direction of arrows of imaginary line). At the same time, when the pinch roller 3 moves in the direction of arrow B, it is caused to downwardly descend in a direction parallel to the axis of the head 1 by an inclined guide 13. In this way the left loading pull-out side and the right loading pull-out side are at different heights so that the tape T is furnished with an inclination along a tape guide 14 around the circumference of the rotary head 1 shown in Figure 2. High speed revolution of a head element 15 of this head 1 causes the tape T to record or reproduce video signals which are inclined relative to the longitudinal axis of the tape. Pins 16 and 17 close to the left loading take-out pin 2 and to the right loading take-out pinch roller 3 respectively, guide the tape T through a path which prevents contact between the parts of the tape lying in the path leading to and from the cassette and the parts passing round the electrical elements 1, 4, 9, 10.

All of the abovementioned guide pins 5,6,7,8 and 11, the full wide erase head 4, the audio erase head 9 and the audio control head 10 are disposed on a sub-mounting 18 which is, in turn, mounted on the chassis 21 of the video cassette recorder. The sub-mounting 18 is formed in one piece, and consists of a portion 18b forming a cylinder portion 19 adapted to be fitted around the lower circumference of the rotary head 1 and an upper plate portion 18a. As shown in Figure 3, the sub-mounting 18 has projections 19a, formed around the inner circumference of its cylinder portion 19 and adapted to come into contact with the lower circumference of the rotary head 1 to secure and keep it in position. Screw holes 20a, for screws 20 are formed adjacent the projections 19a, and the sub-mounting 18 and the rotary head 1 are integrally secured to the chassis 21 by inserting the screws 20 from below the chassis 21.

As shown in Figures 3 and 4, further, the inclined guide 13 for lowering the right loading pull-out pinch roller 3 is also fitted onto the mounting 18 by means of screws 22 and their holes 22a, 22a. A plate 24 is mounted on the guide pin 7 and a separate pole 23 by means of screws 25, 26 and their holes 25a, 26a. A head height adjusting plate 27 is secured to the lower surface of the plate 24 via a screw 28 and inclination adjusting screws 29, 30, and the audio erase head 9 and the audio control head 10 are secured on the lower surface of this plate 27. On both sides of these heads 9 and 10 are disposed the aforementioned guide pins 8 and 11 by means of internal insertion screws 30, 31 and associated screw holes 30a, 31a for them against the bias of springs 28a, 29a therebelow so that their height can be adjusted.

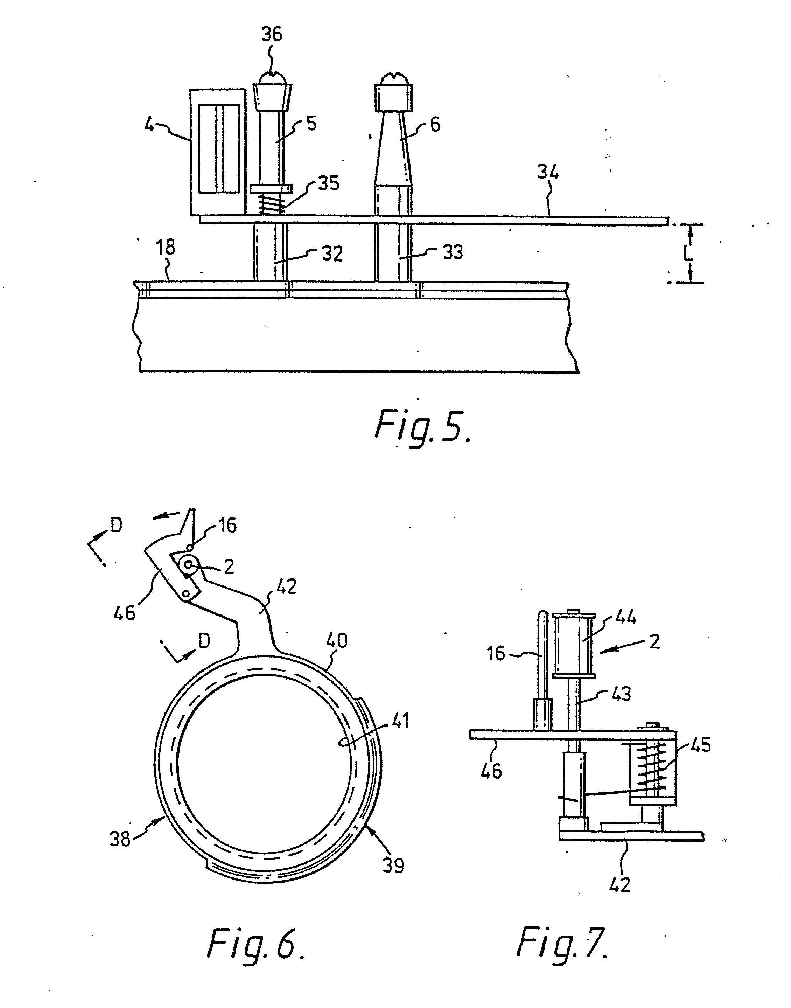

Referring now to Figure 5 also, on the left loading side, a plate 34 is fitted onto the sub-mounting 18 while interposing spacer rings 32, 33 so as to keep a height L (corresponding to the aforementioned height difference between the left loading side and the right loading side) between plate 34 and sub-mounting 18 as shown in Figure 5. The full wide erase head 4 is secured onto this plate 34. On the right side of this head is disposed the tape guide pin 5 secured by the internal insertion screw 36 against the bias of lower spring 35 so that the height of pin 5 is adjustable. The screw 36 is screwed in a screw hole 36a shown in Figure 3 through the aforementioned ring 32. The pin 6 is likewise secured by screwing the screw 37 into the screw hole 37a through the ring 33. In this manner, all of the full wide erase head 4, the audio erase head 9 and the audio control head 10 as the electric elements, the tape guide pins 5, 6, 7, 8 and 11 and the inclined guide 13 for lowering the pinch roller 3 are disposed on the sub-mounting that is to be assembled to the lower part of the rotary head.

Figures 6 and 7 show a loading ring 38 carrying the left-loading pull-out pin 2 and the pin 16 for preventing the tape back friction. This ring 38 is moulded of a synthetic resin and consists of an annulus 41 fitted to the outer circumference of a gear ring 40 having a gear portion 39 interconnected to and interlocking with a right loading ring (not shown). This annulus 41 is rotatably fitted to the outer circumference of the cylinder portion 19 of the sub-mounting 18 shown in Figure 3. The left loading pull-out pin 2 consists of a pole 43 implanted at the tip of an extension 42 of the gear ring 40 and a roller 44 turnably fitted to the upper end of the pole 43. The pin 16 is secured in a pivotable link 46 biassed into pressure contact with the pole 43 via a spring 45. As shown in Figure 1, the pivotable link 46 is rotated against the spring 45 by the tension of the tape T at the time of loading as shown in Figure 1 so that the tape T is moved outwardly (in the direction of arrow in Figure 6) away from the tape run round the head 1 so that contact is prevented.

Thus, it can be seen that the device of the present invention includes the rotary head of a video tape recorder mounted on a sub-mounting having a cylinder portion fitted around the lower circumference of the head wherein the electric control elements such as the audio control head, the guide pins and the like are integrally assembled onto the sub-mounting in conformity with the suspension height of the tape of the rotary head, and the rotary head and the sub-mounting are fitted as a sub-assembly to the chassis of the recorder. According to this arrangement, the travelling path of the magnetic tape, past the rotary head and the electric elements, relative to the head and to these elements can be kept constantly at the accurate positions required without being affected by strain of the chassis and without causing the deviation of its contact positions. Since the necessary electric elements are arranged on the same sub-mounting, setting of the fitting positions of these elements need not be made individually when the recorder is fully assembled.

Furthermore, since the sub-mounting with the rotary head can be fitted to the chassis as a unit, assembly and design can be made extremely simply.

Claims:

1. Video tape recorder, characterized by a chassis (21) and a sub-assembly mounted on the chassis (21), the sub-assembly having a sub-mounting (18) secured to the chassis (21), the sub-mounting (18) carrying a rotary head (1) and having a cylindrical portion (19, 19a) adapted to receive and locate the rotary head (1), the sub-mounting (18) further carrying electrical control elements comprising a pinch roller (3), a full width tape erase head (4), an audio erase head (9), an audio control head (10) and guide means (5 to 8) for guiding a tape (T) relative to the electrical control elements.

2. Recorder as claimed in claim 1, characterized in that the sub-assembly including adjusting means for adjusting the position of, at least, the audio erase head (9) and the audio control head (10) relative to the sub-mounting (18).

3. Recorder as claimed in claim 1 or 2, characterized in that the guide means includes a plurality of guide pins (5 to 8) having guide surfaces for guiding the tape (T), the position of the guide surfaces relative to the sub-mounting (18) being adjustable by screw adjusters.

4. A method of assembling a video tape recorder, characterized by the steps of securing a rotary head (1), a pinch roller (3), a full width tape erase head (4), an audio erase head (9), an audio control head (10) and a plurality of tape guide pins (5 to 8) on a sub-mounting (18) to form a sub-assembly, adjusting the position of the audio control head (10) and the audio erase head (9) relative to the sub-mounting (18), adjusting the position of at least some of the guide pins (5 to 8) relative to the sub-mounting (18), and then securing the sub-assembly to a chassis (21) of the recorder.

**Fig.1.**

**Fig.3.**

Fig. 2.

Fig. 4.

0055302

Fig.5.

Fig.6.

Fig.7.

**0055302**

## European Patent Office

## EUROPEAN SEARCH REPORT

Application number

EP 80 10 4618

| Category | DOCUMENTS CONSIDERED TO BE RELEVANT | | CLASSIFICATION OF THE APPLICATION (Int. Cl.³) |
|---|---|---|---|
| | Citation of document with indication, where appropriate, of relevant passages | Relevant to claim | |
| | GRUNDIG TECHNISCHE INFORMATIONEN, vol. 27, 1980, no. 3, Fürth, pages 109-110 G. KOLB: "Grundig Videorecorder Video 2x4" <br><br> * Page 109, left-hand column, lines 1-19 * <br><br> -- <br><br> GRUNDIG TECHNISCHE INFORMATIONEN, vol. 20, 1973, no. 3, Fürth, pages 185-187 <br> * Page 185, right-hand column, lines 23-36 * <br><br> -- <br><br> US - A - 3 245 063 (GEORGE D. CHENEY et al.) <br> * Column 4, lines 1-13; figures 2,3 * <br><br> -- <br><br> GRUNDIG TECHNISCHE INFORMATIONEN, vol. 26, 1979, no. 6, Fürth, pages 320-324 W. ZEH: "Das Laufwerk CB 95" <br><br> * Page 323, right-hand column, line 17 - page 324, left-hand column, line 3 * <br><br> -- <br><br> GB - A - 2 020 878 (N.V. PHILIPS) <br> * Page 2, lines 98-106, page 3, lines 92-110; figure 2 * <br><br> ---- | 1,4 <br><br><br><br><br><br><br><br> 1 <br><br><br><br><br><br><br><br> 2 <br><br><br><br><br> 2 <br><br><br><br><br><br><br> 3 | G 11 B 25/06 <br> 15/66 <br> 5/46 <br><br><br><br><br><br><br><br> **TECHNICAL FIELDS SEARCHED (Int. Cl.³)** <br><br><br> G 11 B <br><br><br><br><br><br><br><br><br> **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| | The present search report has been drawn up for all claims | | |
|---|---|---|---|
| Place of search <br> The Hague | Date of completion of the search <br> 09-03-1981 | Examiner <br> RAHNER | |

EPO Form 1503.1   06.78